**Europäisches Patentamt**

**European Patent Office**

**Office européen des brevets**

(11) Veröffentlichungsnummer: **0 018 009 B1**

# EUROPÄISCHE PATENTSCHRIFT

(45) Veröffentlichungstag der Patentschrift:
08.06.83

(21) Anmeldenummer: 80102127.0

(22) Anmeldetag: 21.04.80

(51) Int. Cl.³: **H 01 F 1/11, G 11 B 5/70**

(54) **Modifitiertes nadelförmiges magnetisches Eisenoxid und Verfahren zu seiner Herstellung sowie dessen Verwendung zur Herstellung von magnetischen Aufzeichnungsträgern.**

(30) Priorität: 23.04.79 DE 2916403

(43) Veröffentlichungstag der Anmeldung:
29.10.80 Patentblatt 80/22

(45) Bekanntmachung des Hinweises auf die Patenterteilung:
08.06.83 Patentblatt 83/23

(84) Benannte Vertragsstaaten:
**DE FR GB IT NL**

(56) Entgegenhaltungen:

CHEMICAL ABSTRACTS, Band 85, Seite 582, No. 26, 13-12-1976
*Zusammenfassung 201332p Columbus, Ohio, US*
CHEMICAL ABSTRACTS, Band 85, Seite 599, No. 24, 13-12-1976
*Zusammenfassung 185974s Columbus, Ohio, US*
CHEMICAL ABSTRACTS, Band 85, Seite 599, No. 24, 13-12-1976
*Zusammenfassung 185977v Columbus, Ohio, US*
CHEMICAL ABSTRACTS, Band 85, Seite 582, No. 26, 13-12-1976
*Zusammenfassung 201332p Columbus, Ohio, US*
CHEMICAL ABSTRACTS, Band 85, Seite 599, No. 24, 13-12-1976

(73) Patentinhaber: **BASF Aktiengesellschaft,**
**Carl-Bosch-Strasse 38, D-6700 Ludwigshafen (DE)**

(72) Erfinder: **Rudolf, Peter, Dr., Wiesenstrasse 11,**
**D-6701 Neuhofen (DE)**
Erfinder: **Steck, Werner, Dr., Lorscher Strasse 3,**
**D-6704 Mutterstadt (DE)**
Erfinder: **Sarnecki, Wilhelm, Dr., Woogstrasse 48,**
**D-6703 Limburgerhof (DE)**
Erfinder: **Jaeckh, Christof, Dr., Max-Reger-Strasse 31,**
**D-6900 Heidelberg (DE)**

Zusammenfassung 185974s Columbus, Ohio, US
CHEMICAL ABSTRACTS, Band 85, Seite 599, No. 24, 13-12-1976
Zusammenfassung 185977v Columbus, Ohio, US

**Modifiziertes nadelförmiges magnetisches Eisenoxid und Verfahren zu seiner Herstellung sowie dessen Verwendung zur Herstellung von magnetischen Aufzeichnungsträgern**

Die Erfindung betrifft ein durch Zink(II)- bzw. Mangan(II)-ionen modifiziertes nadelförmiges magnetisches Eisenoxid mit einer gegenüber dem Ausgangsmaterial erhöhten Koerzitivfeldstärke, ein Verfahren zu seiner Herstellung sowie seine Verwendung zur Herstellung von magnetischen Aufzeichnungsträgern.

Nadelförmiges Gamma-Eisen(III)-oxid wird in grossem Umfang als magnetisierbares Material bei der Herstellung von magnetischen Aufzeichnungsträgern seit langem eingesetzt. Durch die Fortentwicklung auf dem Gebiet der Aufzeichnungstechnik wurde jedoch zunehmend nach magnetischen Materialien gesucht, die sich vor allem durch eine höhere Koerzitivfeldstärke gegenüber dem Gamma-Eisen(III)-oxid auszeichnen. Es war zwar bekannt, dass sich die Koerzitivfeldstärke von Eisenoxiden durch die Dotierung mit Kobalt u.U. beträchtlich erhöhen lässt, doch zeigen solche Materialien eine Reihe von unerwünschten Eigenschaften. Hierzu gehören insbesondere die thermische und mechanische Instabilität von Remanenz und Koerzitivkraft. Materialien mit solchen Nachteilen sind jedoch für den Einsatz bei magnetischen Aufzeichnungsträgern wenig geeignet.

Es war daher ein lang angestrebtes Ziel, entsprechende Materialien mit hoher Koerzitivfeldstärke, aber ohne die genannten Nachteile, zu erhalten. So beschreibt die US-PS 3 903 004 die Verringerung der Temperaturabhängigkeit der magnetischen Eigenschaften von kobaltmodifiziertem Gamma-Eisen-(III)-oxid durch ein Verfahren, bei welchem gleichzeitig mit Kobalthydroxid auch ein solches aus der Reihe von Cu, Li, Pb, Sn, Ba, Cd, Sr oder In auf den Goethit aufgefällt und dann in üblicher Weise weiterverarbeitet wird. Aus der DE-OS 2 507 420 ist bekannt, auf die kobalthaltigen Eisenoxidhydroxide Oxide oder Phosphate des Zinks, Aluminiums, Cers, Chroms u.a. aufzubringen. Ähnlich wird auch gemäss der DE-OS 2 343 701 vorgegangen. Hier werden Kobalt- und Zinkverbindungen gemeinsam auf das Eisenoxid niedergeschlagen, während nach der DE-OS 2 325 925 das kobalthaltige Eisenoxidhydroxid aus einer Zinkionen enthaltenden Lösung ausgefällt wird. Diese Modifizierung von mit Kobalt volumendotierten Eisenoxiden bezweckt lediglich eine Einschränkung der durch den Gehalt an Kobalt verursachten Stabilitätsprobleme.

Ein anderer Weg, die Erhöhung der Koerzitivfeldstärke von Eisenoxiden auch ohne Anwesenheit von Kobalt zu erreichen, stellt die Zugabe von Zinkionen zu Beginn oder während der Eisenoxidhydroxid-Synthese dar (DE-AS 1 204 644). Durch die Zinkzugabe wird der Habitus der Eisenoxidhydroxidnadeln beeinflusst. Die damit erzielten längeren Nadeln ergeben jedoch nach der Umwandlung ein Gamma-Eisen(III)-oxid, das für die Einarbeitung in das Bindemittelsystem bei magnetischen Aufzeichnungsträgern nicht ausreichend mechanisch belastbar ist.

Es bestand daher die Aufgabe, modifizierte nadelförmige magnetische Eisenoxide bereitzustellen, welche ohne Kobaltdotierung und ohne die damit verbundenen Nachteile eine gegenüber dem Ausgangsmaterial erhöhte Koerzitivfeldstärke aufweisen und dennoch die vorgegebenen Eigenschaften des Ausgangsmaterials, insbesondere bezüglich mechanischer Stabilität und Dispergierbarkeit beibehalten.

Es wurde nun gefunden, dass durch Zink(II)- bzw. Mangan(II)-ionen modifizierte nadelförmige magnetische Eisenoxide die geforderten Eigenschaften besitzen, wenn sie aus einem Kern aus Gamma-Eisen(III)-oxid und eine diesen Kern umhüllenden äusseren Schicht aus einem Zink(II) und/oder Mangan(II) modifizierten Magnetit bestehen und, bezogen auf das gesamte modifizierte Eisenoxid, 0,1 bis 20 Gewichtsprozent Eisen(II)-ionen sowie 0,1 bis 10 Gewichtsprozent Zink(II)- und/oder 0,1 bis 10 Gewichtsprozent Mangan(II)-ionen enthalten und dadurch hergestellt werden, dass nadelförmiges Gamma-Eisen(III)-oxid in Wasser suspendiert, unter Intertgasatmosphäre dieser Suspension zugegebene Eisen(II)-ionen sowie Zink(II)- und/oder Mangan(II)-ionen mittels wässriger Basen bei Temperaturen zwischen 8 und 100°C als Hydroxide auf das Gamma-Eisen(III)-oxid aufgefällt, der gesamte Feststoffanteil abfiltriert, mit Wasser neutral gewaschen und während 1/2 bis 10 Stunden bei einer Temperatur unterhalb 280°C getrocknet und getempert wird.

Als Ausgangsmaterialien für dieses erfindungsgemässe Verfahren eignen sich die nach bekannten Methoden hergestellten nadelförmigen magnetischen Gamma-Eisen(III)-oxide mit einer mittleren Teilchenlänge zwischen 0,2 und 1,5 μm sowie einem Verhältnis von Länge zu Dicke von 6 : 1 bis 20 : 1. Mechanisch stabile Oxide mit einer guten Dispergierbarkeit in organischen Bindemittelsystemen werden bevorzugt. Erhalten werden diese Gamma-Eisen(III)-oxid-Teilchen durch Umwandlung von nadelförmigem Eisen(III)-oxidhydrat in reduzierender Atmosphäre zu Magnetit und anschliessender Oxidation zum Gamma-Eisen(III)-oxid bei Temperaturen unterhalb 400°C. Gegebenenfalls kann zur Verbesserung der mechanischen und magnetischen Eigenschaften vor wie auch nach der Reduktion eine Temperaturbehandlung vorgenommen werden. Auch die Behandlung der verschiedenen Eisenoxid-Vorstufen bei der Herstellung des Gamma-Eisen(III)-oxids mit anorganischen oder organischen Substanzen, z.B. zur Erhöhung der Formstabilität der Teilchen ist möglich und kann sich im besonderen Fall als vorteilhaft herausstellen. Die Herstellung eines geeigneten Gamma-Eisen(III)-oxids lässt sich auch dadurch erreichen, dass ein nadelförmiges unmagnetisches Eisenoxid oder Eisenoxidhydrat mit höheren Kohlenwasserstoffen, höheren Alkoholen oder Aminen, Fettsäuren und deren Salze überzogen und bei einer Temperatur von etwa 400 bis 650°C in Gegenwart von Luft umgewandelt wird. Die für das erfindungsgemässe Verfahren erforderlichen Eisen(II)-, Zink(II)- und/oder Mangan(II)-Verbindungen müssen so ausgewählt werden, dass sie in wässriger alkalischer Lösung nicht oxidierend wirken und die entsprechenden Hydroxide bilden. Zweckmässigerweise werden jeweils die Chloride und Sulfate eingesetzt.

Zur Durchführung des Verfahrens wird das Gamma-Eisen(III)-oxid in Wasser durch intensives Rühren oder mit Hilfe anderer üblicher Geräte suspendiert. Ein Verhältnis von 3 bis 10 Gewichtsteile Wasser je Gewichtsteil Oxid hat sich dabei als zweckmässig herausgestellt. In dem für die Bereitung der Suspension eingesetzten Wasser kann die erforderliche Menge an Zink- und/oder Mangansalz bereits gelöst sein, es ist jedoch auch die Zugabe zur fertigen Suspension ohne Nachteil möglich. Anschliessend werden bei einer Temperatur von 8 bis 100°C, vorzugsweise 20 bis 65°C durch Zugabe wässriger Basen, üblicherweise 48prozentiger Natronlauge, die Zink- und/oder Mangan-Hydroxide auf die Eisenoxidnadeln aufgefällt. Diese Zugabe der wässrigen Base hat in einer solchen Menge zu erfolgen, dass nach dem anschliessenden Eintropfen einer wässrigen Eisen(II)-salzlösung, im allgemeinen einer Eisen(II)-chloridlösung, der pH-Wert der Suspension grösser 10, vorzugsweise grösser 12 ist. Der gesamte Reaktionsablauf wird unter Inertgasabdeckung vorgenommen. Vor dem Abfiltrieren und Auswaschen des gesamten Feststoffs wird noch 2 bis 6 Stunden intensiv gerührt. Zuletzt wird der Filterkuchen 1/2 bis 10 Stunden bei Temperaturen unterhalb 280°C getrocknet und getempert. Wird die Trocknung und Temperung unter Inertgas durchgeführt, dann hat es sich als vorteilhaft herausgestellt, bei Temperaturen zwischen 100 und 280°C, vorzugsweise zwischen 150 und 250°C zu arbeiten, während es bei einer Temperaturbehandlung in Luft zweckmässig ist, Temperaturen zwischen 110 und 150°C einzualten. Jedoch lässt sich dieser Verfahrensschritt auch derart durchführen, dass der Filterkuchen zuerst im Luftstrom und dann, jeweils bei den vorgenannten Temperaturen, unter Inertgas erhitzt wird.

Nach diesem Verfahren lassen sich von Gamma-Eisen(III)-oxid ausgehend die erfindungsgemässen nadelförmigen magnetischen Eisenoxide herstellen. Sie zeichnen sich insbesondere durch Werte für die Koerzitivfeldstärke aus, welche nach dem Stand der Technik nur durch Modifikation der Eisenoxide mit Kobalt erreicht werden. Ausserdem ist es aufgrund des erfindungsgemässen Verfahrens möglich, die vorteilhaften Eigenschaften des jeweils eingesetzten Gamma-Eisen(III)-oxids beizubehalten. Auf diese Weise lassen sich somit Ausgangsmaterialien, welche sich durch hohe mechanische Stabilität, enge Teilchengrössenverteilung und gute magnetische Ausrichtbarkeit auszeichnen, auch noch hinsichtlich der Koerzitivfeldstärke wesentlich verbessern.

Die erfindungsgemässen nadelförmigen magnetischen Eisenoxide eignen sich insbesondere zur Verwendung bei der Herstellung von magnetischen Aufzeichnungsträgern, wodurch sich alle von der Koerzitivfeldstärke beeinflussten elektroakustischen Parameter entsprechend vorteilhaft verändern lassen. Die Herstellung dieser Aufzeichnungsträger geschieht in an sich bekannter Weise. Hierzu werden die magnetischen Materialien in polymeren Bindemitteln dispergiert. Als Bindemittel eignen sich die für diesen Zweck bekannten Verbindungen, wie Homo- und Mischpolymerisate von Polyvinylderivaten, Polyurethanen, Polyestern und ähnliche. Die Bindemittel werden in Lösungen in geeigneten organischen Lösungsmitteln verwendet, die gegebenenfalls weitere Zusätze enthalten können. Die magnetischen Schichten werden auf starre oder biegsame Träger wie Platten, Folien und Karten aufgebracht.

Die Erfindung sei anhand nachfolgender Beispiele näher erläutert.

Die magnetischen Werte der Materialien wurden in einem Schwingmagnetometer bei einer Feldstärke von 160 kA/m gemessen, und zwar die Koerzitivfeldstärke $H_c$ in kA/m, umgerechnet auf eine Stopfdichte von $P = 1,2$ mg/mm$^3$ ($H_{c(P=1,2)}$), die spezifische Remanenz $M_{r/}$ in nTm$^3$/g und die spezifische Sättigungsmagnetisierung $M_m/P$ in nTm$^3$/g bzw. bei einem Messfeld von 800 kA/m als $M_{s/}P$ in nTm$^3$/g.

*Beispiel A 1*

1000 g eines nadelförmigen $P$-Fe$_2$O$_3$ mit einem mittleren Längen-zu-Dickenverhältnis von 10,5, einer mittleren Länge von 0,5 µm und einer Koerzitivfeldstärke von 23,5 kA/m werden in 3 l Wasser, in welchem zuvor 20,84 g ZnCl$_2$, d.h. 1% Zn, bezogen auf eingesetztes $P$-Fe$_2$O$_3$, gelöst worden sind, suspendiert. Danach werden unter starkem Rühren und unter N$_2$-Abdeckung 500 ml 48prozentige Natronlauge zugegeben. Anschliessend werden 70 g Fe(II)-ionen als 359 ml technische Fe-Cl$_2$-Lösung innerhalb von 45 Minuten eingetropft und bei Raumtemperatur und unter N$_2$-Abdeckung noch 6 Stunden gerührt. Daraufhin wird der Feststoff abfiltriert und mit Wasser alkalifrei gewaschen. Der feuchte Filterkuchen wird schliesslich in zwei Teile geteilt und in einem Drehkolben wie folgt getrocknet und getempert.

Teil A 1/I wird bei 150°C zwei Stunden im N$_2$-Strom getrocknet und getempert.

Teil A 1/II wird bei 250°C zwei Stunden im N$_2$-Strom getrocknet und getempert.

Die magnetischen Messwerte und der titrimetisch ermittelte Fe$_3$O$_4$-Gehalt, bezogen auf das gesamte modifizierte magnetische Eisenoxid, sind in Tabelle 1 angegeben.

*Beispiel A 2*

Es wird wie in Beispiel 1 beschrieben verfahren, jedoch werden 41,7 g ZnCl$_2$ (d.h. 2% Zn, bezogen auf das $P$-Fe$_2$O$_3$) verwendet. Der feuchte Filterkuchen wird bei 150°C im Stickstoffstrom getrocknet und getempert. Die Messwerte sind in Tabelle 1 angegeben.

*Beispiel A 3*

Es wird wie im Beispiel A 1 verfahren mit dem Unterschied, dass 62,5 g ZnCl$_2$, d.h. 3% Zn, bezogen auf eingesetztes $P$-Fe$_2$O$_3$, verwendet werden. Der feuchte Filterkuchen wird in zwei Teile zerlegt, wobei

Teil A 3/I bei 150°C und

Teil A 3/II bei 250°C

zwei Stunden im Stickstoffstrom behandelt werden. Die Messergebnisse sind in Tabelle 1 angegeben.

*Vergleichsversuch B 1*

Es wird wie in Beispiel A 2 beschrieben verfahren, jedoch wird der feuchte Filterkuchen zwei Stunden bei 350°C im Stickstoffstrom behandelt. Die Messergebnisse sind in Tabelle 1 angegeben.

*Tabelle 1*

| Beispiel | Temperatur-Behandlung | $Mm/\rho$ | $Mr/\rho$ | $Mr/Mm$ | $H_c$ $\rho = 1,2$ | $Fe_3O_4$ % |
|---|---|---|---|---|---|---|
| A 1/I | 150°C/$N_2$ 2$^h$ | 85 | 41 | 0,48 | 24,9 | 17,6 |
| A 1/II | 250°C/$N_2$ 2$^h$ | 80 | 40 | 0,50 | 25,2 | 21,1 |
| A 2/I | 150°C/$N_2$ 2$^h$ | 82 | 40 | 0,49 | 28,6 | 24,0 |
| A 3/I | 150°C/$N_2$ 2$^h$ | 79 | 39 | 0,49 | 29,9 | 17,9 |
| A 3/II | 250°C/$N_2$ 2$^h$ | 77 | 38 | 0,49 | 28,9 | 22,2 |
| Vgl. Vers. B 1 | 350°C/$N_2$ 2$^h$ | 83 | 40 | 0,48 | 23,1 | 27,6 |

*Vergleichsversuch C*

1000 g eines nadelförmigen $\gamma$-$Fe_2O_3$ mit einem mittleren Längen-zu-Dickenverhältnis von 10,4, einer mittleren Länge von 0,49 μm und einer Koerzitivkraft $H_c$ von 23 kA/m werden in 3 l Wasser suspendiert. Dazu werden 31,4 g trockenes Zinkchlorid, d.h. 3% Zn, bezogen auf eingesetztes -$Fe_2O_3$, und unter kräftigem Rühren 200 ml 48prozentige Natronlauge zugegeben. Es wird noch 6 Stunden gerührt, dann die Suspension abfiltriert und mit Wasser neutral gewaschen. Der feuchte Filterkuchen wird in drei Teile zerlegt und wie folgt getrocknet und getempert:

Teil C/I:     150°C zwei Stunden im $N_2$-Strom.
Teil C/II:     250°C zwei Stunden im $N_2$-Strom.
Teil C/III:     350°C zwei Stunden im $N_2$-Strom.

Die magnetischen Messwerte sind in Tabelle 3 angegeben.

*Tabelle 3*

| Vergl.-Versuch | Temperatur | $Mm/\rho$ | $Mr/\rho$ | $Mr/Mm$ | $H_c$ |
|---|---|---|---|---|---|
| C/I | 150°C/$N_2$ 2$^h$ | 80 | 37 | 0,46 | 22,3 |
| C/II | 250°C/$N_2$ 2$^h$ | 80 | 38 | 0,48 | 22,6 |
| C/III | 350°C/$N_2$ 2$^h$ | 83 | 39 | 0,47 | 22,5 |

*Beispiel D 1*

1000 g eines nadelförmigen $\gamma$-$Fe_2O_3$ mit einem mittleren Längen-zu-Dickenverhältnis von 10,6, einer mittleren Länge von 0,5 μm und einer Koerzitivkraft von 23,5 kA/m, werden in 3 l Wasser, in welchem zuvor 104,24 g $ZnCl_2$, d.h. 5% Zn, bezogen auf eingesetztes $\gamma$-$Fe_2O_3$, gelöst wurden, suspendiert. Danach werden unter kräftigem Rühren 500 ml 48prozentige Natronlauge zugegeben und unter $N_2$-Abdeckung 60 g Fe(II)-ionen als technische $FeCl_2$-Lösung eingetropft. Bei Raumtemperatur wird noch 7 Stunden gerührt, dann abfiltriert und mit Wasser alkalifrei gewaschen. Der feuchte Filterkuchen wird in vier Teile zerlegt und
Teil D 1/I bei 150°C und
Teil D 1/II bei 250°C
im Stickstoffatom zwei Stunden behandelt.
Teil D 1/III wird dagegen zwei Stunden im Luftstrom einer Temperatur von 130°C ausgesetzt.

Als Vergleichsversuch wird Teil D 1/IV zwei Stunden im Stickstoffstrom bei 350°C behandelt.

Die Messergebnisse sind in Tabelle 4 angegeben.

*Beispiel D 2*

Es wird wie im Beispiel D 1 verfahren mit dem Unterschied, dass 100 g Fe(II)-ionen als technische $FeCl_2$-Lösung und 600 ml 48prozentige Natronlauge verwendet werden. Der feuchte Filterkuchen wird in drei Teile, Teil D 2/I, D 2/II und D 2/III, geteilt und wie die Teile D 1/I bis D 1/III behandelt. Die Messergebnisse sind in Tabelle 4 angegeben.

*Beispiel D 3*

Es wird wie im Beispiel D 1 verfahren mit dem Unterschied, dass nur 50 g Fe(II)-ionen als technische $FeCl_2$-Lösung und 500 ml 48prozentige Natronlauge zugesetzt werden. Der feuchte Filterkuchen wird in zwei Teile zerlegt, wobei Teil D 3/I zwei Stunden im Stickstoffstrom bei 150°C behandelt wird, während Teil D 3/II als Vergleichsversuch dabei einer Temperatur von 350°C ausgesetzt wird.

Die Messergebnisse sind in Tabelle 4 angegeben.

*Beispiel D 4*

Es wird wie im Beispiel D 1 verfahren mit dem Unterschied, dass 117 g Fe(II)-ionen als technische $FeCl_2$-Lösung und 600 ml 48prozentige Natronlauge zugesetzt werden. Der feuchte Filterkuchen wird in vier Teile zerlegt und wie folgt getrocknet und getempert:

Teil D 4/I:     150°C zwei Stunden im $N_2$-Strom.
Teil D 4/II:     180°C zwei Stunden im $N_2$-Strom.
Teil D 4/III:     220°C zwei Stunden im $N_2$-Strom.
Teil D 4/IV:     130°C zwei Stunden im Luftstrom.

Diese Messergebnisse sind in Tabelle 4 angegeben.

*Tabelle 4*

| Beispiel | Temperatur-Behandlung | $Mm/\rho$ | $Mr/\rho$ | $Mr/Mm$ | $H_c$ $\rho = 1,2$ | $Fe_3O_4$ % |
|---|---|---|---|---|---|---|
| D 1/I | 150°C/$N_2$ 2$^h$ | 77 | 38 | 0,49 | 34,5 | 20,8 |
| D 1/II | 250°C/$N_2$ 2$^h$ | 76 | 38 | 0,50 | 32,0 | 19,0 |
| D 1/III | 130°C/Luft 2$^h$ | 72 | 35 | 0,49 | 26,8 | 9,0 |
| Vergl. Vers. D 1/IV | 350°C/$N_2$ 2$^h$ | 84 | 39 | 0,46 | 21,9 | 25,8 |
| D 2/I | 150°C/$N_2$ 2$^h$ | 75 | 37 | 0,49 | 34,3 | 23,8 |
| D 2/II | 250°C/$N_2$ 2$^h$ | 72 | 36 | 0,50 | 33,6 | 26,3 |
| D 2/III | 130°C/Luft 2$^h$ | 70 | 34 | 0,49 | 29,7 | 21,1 |
| D 3/I | 150°C/$N_2$ 2$^h$ | 77 | 38 | 0,49 | 29,9 | 14,9 |
| Vergl. Vers. D 3/II | 350°C/$N_2$ 2$^h$ | 81 | 39 | 0,48 | 22,6 | 23,5 |
| D 4/I | 150°C/$N_2$ 2$^h$ | 80 | 38 | 0,48 | 28,0 | 31,0 |
| D 4/II | 180°C/$N_2$ 2$^h$ | 78 | 39 | 0,50 | 28,0 | 30,3 |
| D 4/III | 220°C/$N_2$ 2$^h$ | 80 | 39 | 0,49 | 29,5 | 30,9 |
| D 4/IV | 130°C/Luft 2$^h$ | 82 | 39 | 0,48 | 28,9 | 16,4 |

*Beispiel E 1*

1000 g eines nadelförmigen $\gamma$-$Fe_2O_3$ mit einem mittleren Längen-zu-Dickenverhältnis von 10,6, einer mittleren Nadellänge von 0,48 μm und einer Koerzitivkraft von 23,7 kA/m werden in 3 l Wasser, in dem zuvor 104,204 g $ZnCl_2$, d.h. 5% Zn, bezogen auf eingesetztes $\gamma$-$Fe_2O_3$, gelöst wurden, suspendiert. Die Suspension wird auf 10°C abgekühlt und mit 500 ml 48prozentige Natronlauge portionsweise versetzt. Danach werden 70 g Fe(II)-ionen als technische $FeCl_2$-Lösung eingetropft. Die Suspension wird noch 13 Stunden gerührt und bis Ende unter $N_2$-Abdeckung bei 10°C Reaktionstemperatur gehalten. Zuletzt wird der Feststoff abfiltriert und alkalifrei gewaschen. Eine Hälfte des Filterkuchens, Teil E 1/I, wird bei 100°C drei Stunden im Stickstoffstrom behandelt und die andere Hälfte, Teil E 1/II, bei 150°C.

Die Messergebnisse sind in Tabelle 5 angegeben.

*Beispiel E 2*

Es wird wie im Beispiel E 1 verfahren mit dem Unterschied, dass die Reaktionstemperatur bei 60°C gehalten wird. Der Filterkuchen wird in drei Teile zerlegt und wie folgt getrocknet und getempert:

Teil E 2/I:     150°C zwei Stunden im $N_2$-Strom.
Teil E 2/II:     180°C zwei Stunden im $N_2$-Strom.
Teil E 2/III:     220°C zwei Stunden im $N_2$-Strom.

Die Messergebnisse sind in Tabelle 5 angegeben.

*Beispiel F*

Es wird wie im Beispiel A 1 verfahren mit dem Unterschied, dass 8% Zn, bezogen auf eingesetztes $\gamma$-$Fe_2O_3$, 140 g Fe(II)-ionen als technische $FeCl_2$-Lösung und 650 ml 48prozentige NaOH zugesetzt werden. Der Filterkuchen wird in vier Teile zerlegt und wie folgt getrocknet und getempert:

Teil F/I:     150°C zwei Stunden im $N_2$-Strom.
Teil F/II:     250°C zwei Stunden im $N_2$-Strom.
Teil F/III:     130°C zwei Stunden im Luftstrom.

Vergleichsweise wird Teil F/IV bei 350°C zwei Stunden im $N_2$-Strom behandelt.

Die Messergebnisse sind in Tabelle 5 angegeben.

*Tabelle 5*

| Beispiel | Temperatur-Behandlung | $Mm/\rho$ | $Mr/\rho$ | $Mr/Mm$ | $H_c$ $\rho = 1,2$ | $Fe_3O_4$ % |
|---|---|---|---|---|---|---|
| E 1/I | 100°C/$N_2$ 3$^h$ | 79 | 38 | 0,48 | 27,9 | 18,2 |
| E 1/II | 150°C/$N_2$ 2$^h$ | 78 | 38 | 0,49 | 29,9 | 18,9 |
| E 2/I | 150°C/$N_2$ 2$^h$ | 79 | 38 | 0,48 | 30,0 | 20,8 |
| E 2/II | 180°C/$N_2$ 2$^h$ | 79 | 39 | 0,49 | 31,6 | 17,8 |
| E 2/III | 220°C/$N_2$ 2$^h$ | 82 | 39 | 0,48 | 30,0 | 20,5 |
| F /I | 150°C/$N_2$ 2$^h$ | 69 | 33 | 0,48 | 31,4 | 32,9 |
| F /II | 250°C/$N_2$ 2$^h$ | 70 | 34 | 0,49 | 29,5 | 25,7 |
| F /III | 130°C/Luft 2$^h$ | 66 | 32 | 0,48 | 32,2 | 14,3 |
| Vergl. Vers. F /IV | 350°C/$N_2$ 2$^h$ | 77 | 35 | 0,45 | 21,9 | 40,6 |

*Beispiel G 1*

1000 g nadelförmiges $\gamma$-$Fe_2O_3$ mit einem mittleren Längen-zu-Dickenverhältnis von 10,5, einer mittleren Länge von 0,5 $\mu$m und einer Koerzitivkraft von 23,5 kA/m werden in 3 l Wasser, in dem zuvor 36 g $MnCl_2$ . $4H_2O$, d.h. 1% Mn, bezogen auf eingesetztes $\gamma$-$Fe_2O_3$, gelöst worden sind, suspendiert. Unter Rühren werden 500 ml 48prozentige Natronlauge hinzugefügt und hernach bei Raumtemperatur und unter $N_2$-Abdeckung 70 g Fe(II)-ionen als technische $FeCl_2$-Lösung zugetropft. Es wird noch 6 Stunden gerührt, dann abfiltriert und der Filterkuchen mit Wasser alkalifrei gewaschen. Der feuchte Filterkuchen wird in drei Teile zerlegt und
Teil G 1/I bei 150°C und
Teil G 1/II bei 250°C zwei Stunden im $N_2$-Strom behandelt.

Zum Vergleich wird Teil G 1/III zwei Stunden im $N_2$-Strom einer Temperatur von 350°C ausgesetzt.

Die Messergebnisse sind in Tabelle 6 angegeben.

*Beispiel G 2*

Es wird wie im Beispiel G 1 verfahren mit dem Unterschied, dass 180,1 g $MnCl_2$ . $4H_2O$ und 100 g Fe(II)-ionen als technische $FeCl_2$-Lösung verwendet werden. Der feuchte Filterkuchen wird in die Teile G 2/I, G 2/II und G 2/III zerlegt und unter denselben Bedingungen wie bei den Beispielen G 1/I bis G 1/III behandelt.

Die Messergebnisse sind in Tabelle 6 angegeben.

*Beispiel H 1*

1000 g nadelförmiges $\gamma Fe_2O_3$ mit einem mittleren Längen-zu-Dickenverhältnis von 10,5, einer mittleren Länge von 0,5 $\mu$m und einer Koerzitivkraft von 23,5 kA/m werden in 3 l Wasser, in dem zuvor 62,5 g $ZnCl_2$ und 108 g $MnCl_2$ . $4H_2O$, d.h. 3% Zn und 3% Mn, bezogenauf eingesetztes $\gamma$-$Fe_2O_3$, gelöst worden sind, suspendiert. Unter Rühren werden 650 ml 48prozentige Natronlauge hinzugefügt und dann bei Raumtemperatur und unter Inertgasabdeckung 100 g Fe(II)-ionen in Form einer technischen $FeCl_2$-Lösung zugetropft. Es wird noch 6 Stunden gerührt, danach die Suspension abfiltriert und mit Wasser alkalifrei gewaschen.

Der feuchte Filterkuchen wird in 4 Teile zerlegt und
Teil H 1/I bei 150°C und
Teil H 1/II bei 250°C zwei Stunden im Stickstoffstrom sowie
Teile H 1/III bei 130°C zwei Stunden im Luftstrom behandelt.

Zum Vergleich wird Teil H 1/IV dagegen zwei Stunden im Stickstoffstrom einer Temperatur von 350°C ausgesetzt.

Die Messergebnisse sind in Tabelle 6 angegeben.

*Beispiel H 2*

Es wird wie im Beispiel H1 verfahren mit dem Unterschied, dass 104,24 g $ZnCl_2$, 108 g $MnCl_2$ . $4H_2O$, d.h. 5% Zn und 3% Mn, jeweils bezogen auf eingesetztes $\gamma$-$Fe_2O_3$, und 117 g Fe(II)-ionen als technische $FeCl_2$-Lösung zugesetzt werden. Der feuchte Filterkuchen wird in die Teile H 2/I bis H 2/IV zerlegt und bei den unter H 1/I bis H 1/IV angegebenen Bedingungen behandelt.

Die Messergebnisse sind in Tabelle 6 aufgeführt.

*Tabelle 6*

| Beispiel | Temperatur-Behandlung | $Mm/\rho$ | $Mr/\rho$ | $Mr/Mm$ | $H_c$ $\rho=1,2$ | $Fe_3O_4$ % |
|---|---|---|---|---|---|---|
| G 1/I | 150°C/N$_2$ 2$^h$ | 83 | 41 | 0,49 | 26,9 | 22,5 |
| G 1/II | 250°C/N$_2$ 2$^h$ | 83 | 42 | 0,51 | 26,9 | 28,1 |
| Vergl. Vers. | | | | | | |
| G 1/III | 350°C/N$_2$ 2$^h$ | 83 | 41 | 0,49 | 23,6 | 33,5 |
| G 2/I | 150°C/N$_2$ 2$^h$ | 84 | 43 | 0,51 | 28,0 | 32,1 |
| G 2/II | 250°C/N$_2$ 2$^h$ | 81 | 42 | 0,52 | 25,2 | 32,0 |
| Vergl. Vers. | | | | | | |
| G 2/III | 350°C/N$_2$ 2$^h$ | 87 | 43 | 0,49 | 22,4 | 41,4 |
| H 1/I | 150°C/N$_2$ 2$^h$ | 80 | 38 | 0,48 | 28,5 | 28,3 |
| H 1/II | 250°C/N$_2$ 2$^h$ | 80 | 38 | 0,48 | 26,5 | 22,0 |
| H 1/III | 130°C/Luft 2$^h$ | 79 | 39 | 0,49 | 27,6 | 10,0 |
| Vergl. Vers. | | | | | | |
| H 1/IV | 350°C/N$_2$ 2$^h$ | 88 | 40 | 0,45 | 20,7 | 29,2 |
| H 2/I | 150°C/N$_2$ 2$^h$ | 74 | 36 | 0,49 | 28,8 | 23,8 |
| H 2/II | 250°C/N$_2$ 2$^h$ | 77 | 35 | 0,45 | 27,0 | 27,4 |
| H 2/III | 130°C/Luft 2$^h$ | 72 | 35 | 0,49 | 29,5 | 11,1 |
| Vergl. Vers. | | | | | | |
| H 2/IV | 350°C/N$_2$ 2$^h$ | 86 | 38 | 0,44 | 20,0 | 30,6 |

*Beispiel J/1*

900 Teile eines gemäss Beispiel D 1/III hergestellten Materials werden in einer Stahlkugelmühle mit 225 Teilen einer 20prozentigen Lösung eines Copolymerisats aus 80% Vinylchlorid, 10% Dimethylmaleinat und 10% Diäthylmaleinat in einem Gemisch aus gleichen Teilen Tetrahydrofuran und Dioxan, 808 Teilen einer 13prozentigen Lösung eines thermoplastischen Polyesterurethans aus Adipinsäure, 1,4-Butandiol und 4,4'-Diisocyanatodiphenylmethan in einem Gemisch aus gleichen Teilen Tetrahydrofuran und Dioxan, 54 Teilen Sojalecithin, 0,9 Teilen eines handelsüblichen Silikonöls, 1,8 Teilen Hydrochinon, 1,8 Teilen Butylstearat, 9 Teilen Isostearinsäure und 620 Teilen des genannten Lösungsmittelgemisches gemischt und dispergiert. Danach wird die Dispersion mit 1,5% 4,4'-Diisoxyanatodiphenylmethan versetzt, filtriert und in bekannter Weise auf eine 6 µm dicke Polyäthylenterephthalatfolie in einer solchen Stärke aufgetragen, dass nach dem Ausrichten der nadelförmigen Teilchen durch Vorbeiführen an einem Magnetfeld und anschliessendem Trocknen eine Magnetschicht in der in Tabelle 7 angegebenen Schichtstärke d [um] verbleibt.

Die magnetischen Eigenschaften, wie die Koerzitivfeldstärke $H_c$ [kA/m], Remanenz $M_r$ [mT], Sättigung $M_s$ [mT], relative Remanenz $M_r/M_s$ und Richtfaktor RF (Remanenz längs/Remanenz quer zur Ausrichtung) werden in einem Messfeld von 800 kA/m bestimmt und sind in Tabelle 7 aufgeführt, ebenso die an einem aus der beschichteten Folie geschnittenen Magnetband in Anlehnung an DIN 45 512 gegen das Bezugsband T 308 S bei einer Aufzeichnung von 10 kHz, gemessenen elektroakustischen Eigenschaften, wie Höhenaussteuerbarkeit $A_H$, dem maximalen Bandfluss, und Höhenempfindlichkeit $E_H$.

*Beispiel J/2*

Es wird wie bei Beispiel J/1 verfahren, jedoch wird als magnetisches Material ein solches gemäss Beispiel A 3/I eingesetzt. Die Messergebnisse sind in Tabelle 7 aufgeführt.

*Beispiel J/3*

Es wird wie bei Beispiel J/1 verfahren, jedoch wird als magnetisches Material ein solches gemäss Beispiel D 2/III eingesetzt. Die Messergebnisse sind in Tabelle 7 aufgeführt.

*Beispiel J/4*

Es wird wie bei Beispiel J/1 verfahren, jedoch wird als magnetisches Material ein solches gemäss Beispiel D 2/I eingesetzt. Die Messergebnisse sind in Tabelle 7 aufgeführt.

*Beispiel J/5*

Es wird wie bei Beispiel J/1 verfahren, jedoch wird als magnetisches Material ein solches gemäss Beispiel D 1/I eingesetzt. Die Messergebnisse sind in Tabelle 7 aufgeführt.

*Beispiel J/6*

Es wird wie bei Beispiel J/1 verfahren, jedoch wird als magnetisches Material das bei Beispiel A 1 eingesetzte Ausgangsmaterial verwendet. Die Messergebnisse sind in Tabelle 7 aufgeführt.

*Tabelle 7*

| Beispiel | $H_c$ | $M_r$ | $M_s$ | $M_r/M_s$ | RF | d | $A_H$ | $E_H$ |
|---|---|---|---|---|---|---|---|---|
| J/1 | 28,5 | 144 | 169 | 0,85 | 3,3 | 5,5 | + 1,1 | + 1,8 |
| J/2 | 31,1 | 148 | 179 | 0,82 | 2,8 | 5,0 | + 3,2 | + 2,7 |
| J/3 | 31,6 | 148 | 182 | 0,81 | 2,9 | 4,7 | + 3,0 | + 2,5 |
| J/4 | 36,5 | 151 | 187 | 0,81 | 2,7 | 4,4 | + 5,2 | + 3,1 |
| J/5 | 38,9 | 165 | 193 | 0,85 | 3,0 | 4,6 | + 5,4 | + 3,2 |
| J/6 | 21,8 | 149 | 180 | 0,83 | 2,2 | 5,5 | − 0,1 | + 0,2 |

**Beispiel K**

In 1 200 ml Wasser werden 8,33 g $ZnCl_2$ gelöst. 200 g eines nadelförmigen $\gamma$-$Fe_2O_3$ mit einem mittleren Längen-zu-Dickenverhältnis von 13,0, einer mittleren Länge von 0,55 µm und einer Koerzitivkraft von 24,2 kA/m werden in die Lösung eingerührt. Die Suspension wird unter heftigem Rühren auf 95°C erhitzt, mit 72 ml einer 32prozentigen $FeCl_2$-Lösung versetzt und danach mit 150 ml einer 48prozentigen Natronlauge versetzt. Die Suspension wird unter $N_2$-Abdeckung vier Stunden auf 95°C gehalten, dann abfiltriert und mit Wasser alkali- und chloridfrei gewaschen. Der feuchte Filterkuchen wird in zwei Teile zerlegt und

Teil K/1 bei 150°C und

Teil K/2 bei 250°C zwei Stunden im Stickstoffstrom behandelt.

Die Messergebnisse sind in Tabelle 8 angegeben.

*Tabelle 8*

| Beispiel | Temperatur-Behandlung | $Mm/\rho$ | $Mr/\rho$ | Mr/Mm | $H_c$ $\rho = 1,2$ | $Fe_3O_4$ % |
|---|---|---|---|---|---|---|
| K/1 | 150°C/$N_2$ 2ʰ | 82 | 40 | 0,49 | 27,7 | 19,8 |
| K/2 | 250°C/$N_2$ 2ʰ | 83 | 38 | 0,46 | 27,7 | 22,1 |

**Patentansprüche**

1. Durch Zink(II)- bzw. Mangan(II)-ionen modifiziertes nadelförmiges magnetisches Eisenoxid, dadurch gekennzeichnet, dass es aus einem Kern aus Gamma-Eisen(III)-oxid und einer diesen Kern umhüllenden äusseren Schicht aus einem mit Zink(II)- und/oder Mangan(II)-ionen modifizierten Magnetit besteht und, bezogen auf das gesamte modifizierte Eisenoxid, 0,1 bis 20 Gewichtsprozent Eisen(II)-ionen sowie 0,1 bis 10 Gewichtsprozent Zink(II)-ionen und/oder 0,1 bis 10 Gewichtsprozent Mangan(II)-ionen enthält.

2. Verfahren zur Herstellung der modifizierten nadelförmigen magnetischen Eisenoxide gemäss Anspruch 1, dadurch gekennzeichnet, dass nadelförmiges Gamma-Eisen(III)-oxid in Wasser suspendiert wird, unter Inertgasatmosphäre dieser Suspension zugegebene Eisen(II)-ionen sowie Zink(II)- und/oder Mangan(II)-ionen mittels wässriger Basen bei Temperaturen zwischen 8 und 100°C als Hydroxide auf das Gamma-Eisen(III)-oxid aufgefällt werden und dass der gesamte Feststoffanteil abfiltriert, mit Wasser neutral gewaschen und während 1/2 bis 10 Stunden bei einer Temperatur unterhalb 280°C getrocknet und getempert wird.

3. Verfahren gemäss Anspruch 2, dadurch gekennzeichnet, dass nadelförmiges Gamma-Eisen(III)-oxid in Wasser, welches Zink(II)- und/oder Mangan(II)-ionen gelöst enthält, suspendiert wird, dass durch Zugabe wässriger Basen bei einer Temperatur zwischen 8 und 100°C zuerst die Zink(II)- und/oder Mangan(II)-ionen sowie die anschliessend unter Inertgasatmosphäre zugesetzten Eisen(II)-ionen als Hydroxide auf das Gamma-Eisen(III)-oxid aufgefällt werden und dass der gesamte Feststoffanteil abfiltriert, mit Wasser neutral gewaschen und während 1/2 bis 10 Stunden bei Temperaturen zwischen 100 und 280°C getrocknet und getempert wird.

4. Verfahren gemäss Anspruch 3, dadurch gekennzeichnet, dass die Zugabe der wässrigen Base in einer solchen Menge erfolgt, dass die Suspension nach dem Ausfällen der Eisen(II)- sowie Zink(II)- und/oder Mangan(II)-Hydroxide einen pH-Wert grösser 10 besitzt.

5. Verfahren nach Anspruch 3 oder 4, dadurch gekennzeichnet, dass der abfiltrierte und mit Wasser neutral gewaschene Feststoffanteil während 1/2 bis 10 Stunden in Luft bei Temperaturen zwischen 110 und 150°C getrocknet und getempert wird.

6. Verfahren gemäss Anspruch 3 oder 4, dadurch gekennzeichnet, dass der abfiltrierte und mit Wasser neutral gewaschene Feststoffanteil während 1/2 bis 10 Stunden in Inertgasatmosphäre bei Temperaturen zwischen 150 und 250°C getrocknet und getempert wird.

7. Verwendung der modifizierten nadelförmigen magnetischen Eisenoxide gemäss Anspruch 1 zur Herstellung von magnetischen Aufzeichnungsträgern.

## Claims

1. An acicular magnetic iron oxide, modified by zinc(II) ions and/or manganese(II) ions, which consists of a core of gamma-iron(III) oxide surrounded by a shell of a magnetite modified with zinc(II) ions and/or manganese(II) ions, and which contains, based on the total modified iron oxide, from 0.1 to 20 per cent by weight of iron(II) ions and from 0.1 to 10 per cent by weight of zinc(II) ions and/or from 0.1 to 10 per cent by weight of manganese(II) ions.

2. A process for the manufacture of a modified acicular magnetic iron oxide as claimed in claim 1, wherein acicular gamma-iron(III) oxide is suspended in water, iron(II) ions, and zinc(II) ions and/or manganese(II) ions, addet to this suspension, are precipitated as hydroxides onto the gamma-iron(III) oxide by means of an aqueous base under an inert gas atmosphere at from 8 to 100°C, and all the solids are filtered off, washed neutral with water and dried and heated for from 1/2 to 10 hours at below 280°C.

3. A process as claimed in claim 2, wherein acicular gamma-iron(III) oxide is suspended in water which contains dissolved zinc(II) ions and/or manganese(II) ions, an aqueous base is added so as to precipitate, at from 8 to 100°C, first the zinc(II) ions and/or manganese(II) ions and then the iron(II) ions, subsequently added under an inert gas atmosphere, as hydroxides onto the gamma-iron(III) oxide, and all the solids are filtered off, washed neutral with water and dried and heated for from 1/2 to 10 hours at from 100 to 280°C.

4. A process as claimed in claim 3, wherein the aqueous base is added in such an amount that after precipitation of the iron(II) hydroxide and zinc(II) hydroxide and/or manganese(II) hydroxide, the pH of the suspension is greater than 10.

5. A process as claimed in claim 3 or 4, wherein the solids which have been filtered off and washed neutral with water are dried and heated for from 1/2 to 10 hours in air at from 110 to 150°C.

6. A process as claimed in claim 3 or 4, wherein the solids which have been filtered off and washed neutral with water are dried and heated for from 1/2 to 10 hours in an inert gas atmosphere at from 150 to 250°C.

7. The use of a modified acicular magnetic iron oxide as claimed in claim 1 for the production of magnetic recording media.

## Revendications

1. Oxyde de fer aciculaire modifié par des ions zinc (II) ou manganèse (II), caractérisé par le fait qu'il est constitué d'un noyau d'oxyde de fer (III) - γ et d'une couche extérieure entourant ce noyau et constitué d'une magnétite modifiée par des ions zinc (II) et/ou manganèse (II) et il contient, rapportés à tout l'oxyde de fer modifié, 0 à 20% en poids d'ions fer (II) ainsi que 0,1 à 10% en poids d'ions zinc (II) et/ou 0,1 à 10% en poids d'ions manganèse (II).

2. Procédé de préparation d'oxydes de fer aciculaires modifiés selon la revendication 1, caractérisé par le fait qu'on met en suspension dans l'eau de l'oxyde de fer (III) - γ aciculaire, que des ions fer (III) ainsi que des ions zinc (II) et/ou·manganèse (II) ajoutés à cette suspension sont précipités, sous atmosphère de gaz inerte, sur l'oxyde de fer (III) - γ , sous forme d'hydroxydes, au moyen de bases aqueuses, à des températures comprises entre 8 et 100°C.

3. Procédé selon la revendication 2, caractérisé par le fait qu'on met de l'oxyde de fer (III) - γ , aciculaire en suspension dans de l'eau qui contient dissous des ions zinc (II) et/ou manganèse (II), que par addition de bases aqueuses, d'une température comprise entre 8 et 100°C, on fait précipiter sur l'oxyde de fer (III) - γ , sous forme d'hydroxyde, d'abord les ions zinc (II) et/ou manganèse (II) ainsi que les ions fer (II) ajoutés ensuite sous atmosphère de gaz inerte, et qu'on filtre toute la partie solide, on lave à neutralité et on sèche et on réchauffe, pendant 1/2 à 10 heures, à des températures comprises entre 100 et 280°C.

4. Procédé selon la revendication 3, caractérisé par le fait que l'addition de la base aqueuse est effectuée en quantité telle que la suspension présente, après précipitation des hydroxydes de fer (II), ainsi que de zinc (II) et/ou manganèse (II), un pH supérieur à 10.

5. Procédé selon la revendication 3 ou 4, caractérisé par le fait que la partie solide, filtrée et lavée à neutralité avec de l'eau, est séchée et rechauffée pendant 1/2 à 10 heures, à l'air, à des températures comprises entre 110 et 150°C.

6. Procédé selon la revendication 3 ou 4, caractérisé par le fait que la partie solide, filtrée et lavée à neutralité avec de l'eau, est séchée et rechauffée pendant 1/2 à 10 heures, en atmosphère de gaz inerte à des températures comprises entre 150 et 250°C.

7. Utilisation des oxydes de fer magnétiques, aciculaires modifiés selon la revendication 1 pour la fabrication de supports d'enregistrement magnétiques.